# EUROPEAN PATENT APPLICATION

(11) **EP 1 845 234 A1**
(43) Date of publication of application: **17.10.2007**
(21) Application number: 06254890.4
(22) Date of filing: 21.09.2006
(51) Int. Cl.: F01D 5/08, F01D 25/08, F01D 25/12

(54) **Methods and apparatus for double flow turbine first stage cooling**

(30) Priority: 22.09.2005 US 232785
(71) Applicant: General Electric Company, Schenectady, NY 12345 (US)
(72) Inventor: Cornell, David Richard, Clifton Park, New York 12065 (US)
(74) Representative: Illingworth-Law, William Illingworth

(57) **Abstract**

Method and apparatus for cooling a double flow steam turbine (10) are provided. In one embodiment, the method includes supplying steam to the turbine to form a main inlet steam flow, allowing steam to bleed from the main inlet flow to an annulus (68) bounded by an inner shell (56), nozzle plate (58) and rotor body (54) of the turbine, and directing the bleed steam to bucket dovetail steam balance holes (74).

## Description

### BACKGROUND OF THE INVENTION

This invention relates generally to steam turbines, and more particularly, to cooling a first stage of a double flow turbine.

A steam turbine typically includes a high-pressure (HP) turbine section, an intermediate-pressure (IP) turbine section, and a low-pressure (LP) turbine section. Each turbine section includes rotatable steam-turbine blades fixedly attached to, and radially extending from, a steam-turbine shaft. The shaft is rotatably supported by bearings. The bearings may be located longitudinally outwardly from the turbine sections.

A steam turbine has a defined steam path which includes, in serial-flow relationship, a steam inlet, a turbine, and a steam outlet. Some areas in a steam turbine may become stagnant with respect to steam flow. For example, there may be insufficient driving force to provide sufficient cooling steam flow in all areas of the turbine. As a result, a steady stage temperature may not be achieved. That is, the area in which steam flow is stagnant may have an increased temperature as compared to the temperature in other areas of the turbine. Achieving a steady stage temperature facilitates operational efficiency and avoidance of component failure.

### BRIEF DESCRIPTION OF THE INVENTION

In one embodiment, a method for cooling a double flow steam turbine is provided. The method includes supplying steam to the turbine to form a main inlet steam flow, allowing steam to bleed from the main inlet flow to an annulus bounded by an inner shell, nozzle plate and rotor body of the turbine, and directing the bleed steam to bucket dovetail steam balance holes.

In another embodiment, a cooling steam flow path through a double flow steam turbine is provided. The steam flow path includes an annulus bounded by an inner shell, nozzle plate, and rotor body of a* turbine. The flow path extends from the annulus to a bucket wheel space, and from the bucket wheel space into bucket dovetail steam balance holes. The flow path extends from the bucket dovetail steam balance holes to a stage exit main flow.

In yet another embodiment, a rotary machine is provided. The rotary machine includes a rotor rotatable about a longitudinal axis and including an outer annular surface, an annular outer casing including an inner surface wherein the outer casing is spaced radially outwardly from the rotor. The machine further includes a cooling openings that allow cooling steam to flow from a main inlet flow to an annulus bounded by an inner shell, nozzle plate, and rotor body. The cooling flow extends from the annulus to a bucket wheel space, and from the bucket wheel space into bucket dovetail steam balance holes. The flow path extends from the bucket dovetail steam balance holes to a stage exit main flow.

### BRIEF DESCRIPTION OF THE DRAWINGS

Embodiments of the present invention will now be described, by way of example only, with reference to the accompanying drawings, in which:
Figure 1 is a schematic illustration of an example opposed flow, or double flow, steam turbine.
Figure 2 is a more detailed illustration of a portion of the steam turbine schematically illustrated in Figure 1.

### DETAILED DESCRIPTION OF THE INVENTION

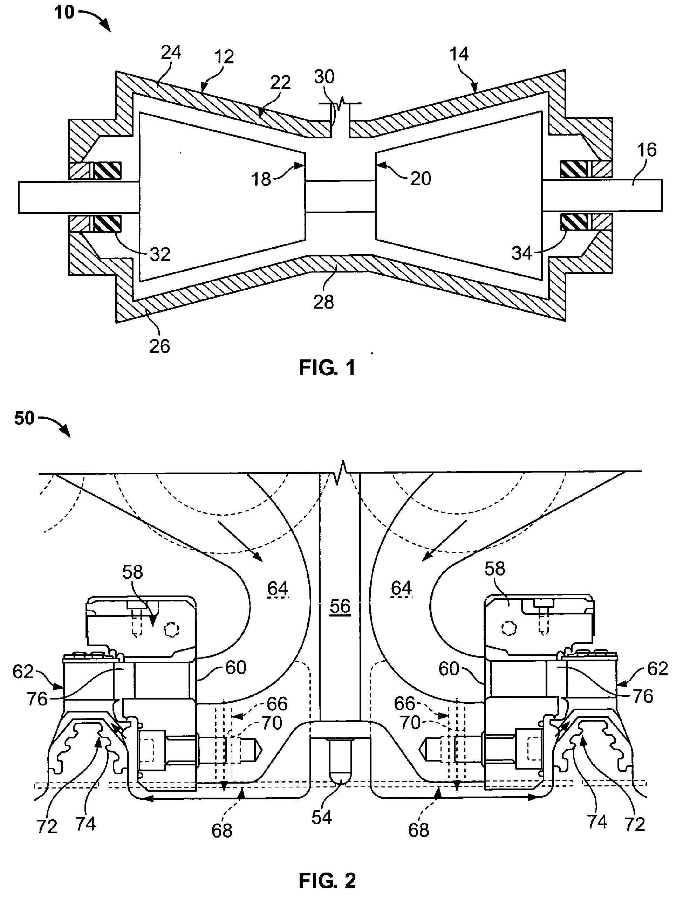

Figure 1 is a schematic illustration of an example opposed-flow steam turbine 10. Turbine 10 includes first and second high pressure (HP) sections 12 and 14. A rotor shaft 16 extends through sections 12 and 14. Each HP section 12 and 14 includes a nozzle 18 and 20. A single outer shell or casing 22 is divided axially into upper and lower half sections 24 and 26, respectively, and spans both HP sections 12 and 14. A central section 28 of shell 22 includes a high pressure steam inlet 30. Within outer shell or casing 22, HP sections 12 and 14 are arranged in a single bearing span supported by journal bearings 32 and 34.

In operation, high pressure steam inlet 30 receives high pressure/high temperature steam from a source, for example, a power boiler (not shown). The steam is routed through HP sections 12 and 14 wherein work is extracted from the steam to rotate rotor shaft 16. The steam exits HP sections 12 and 14 and is routed, for example, to an intermediate pressure turbine (not shown).

Figure 2 is a more detailed illustration of a portion 50 of the steam turbine schematically illustrated in Figure 1. As shown in Figure 2, a rotor 52 includes a rotor body 54 that is supported within an inner shell 56. Rotor 52 includes a nozzle plate 58 at an inlet 60 of HP compressor 62.

In order to attain a steady state rotor body temperature, sufficient steam is provided from an inlet bowl 64 to prevent heat up of rotor 52 and inner shell 56 at HP steam inlet 60. More particularly, a cooling path 66 is provided that permits cooling flow into an annulus space 68 between inner shell 56 and rotor 52 that facilitates maintaining a steady state rotor body temperature. Cooling path 66 includes cooling openings 70 that allow a portion of the inlet steam to bleed into annulus space 68 bounded by inner shell 56, rotor body 54, and nozzle plate 58. Path 66 extends from annulus 68 to a bucket upstream wheel space 72 and feeds bucket dovetail steam balance holes 74. Cooling path 66 extends from bucket dovetail holes 74 to mixing with a first stage exit main flow 76.

Allowing a small amount of steam flow to bath annulus 68 facilitates reducing a risk of creating a bottled up, or stagnant, area with subsequent heat up of both rotor 52 and shell 56. Since cooling path 66 also includes supplying cooling flow to bucket dovetail steam balance holes 72 to minimize leakage from an interstage area, such path 66 also facilitates minimizing stage losses due to bleed off of inlet steam. In addition, by having cooling paths 66 on both ends of double flow first stage, symmetric flow is provided to bucket wheel space areas 70 which facilitates minimizing the overall stage thrust of the first stage. That is, the symmetric flow facilitates ensuring pressure is the same at both ends of the symmetric first stage.

While the invention has been described in terms of various specific embodiments, those skilled in the art will recognize that the invention can be practiced with modification within the spirit and scope of the claims.

**PARTS LIST**

| | |
|---|---|
| 10 | Steam turbine |
| 12 | High pressure (HP) section |
| 14 | HP section |
| 16 | Rotor shaft |
| 18 | Nozzle |
| 20 | Nozzle |
| 22 | Outer shell or casing |
| 24 | Upper half section |
| 26 | Lower half section |
| 28 | Central section |
| 30 | High pressure steam inlet |
| 32 | Journal bearings . |
| 34 | Journal bearings |
| 50 | Portion |
| 52 | Rotor |
| 54 | Rotor body |
| 56 | Inner shell |
| 58 | Nozzle plate |
| 60 | HP steam inlet |
| 62 | HP compressor |
| 64 | Inlet bowl |
| 66 | Cooling path |
| 68 | Annulus space |
| 70 | Cooling openings |
| 72 | Bucket upstream wheel space |
| 74 | Dovetail steam balance holes |
| 76 | Stage exit main flow |

## Claims

1. A method for cooling a double flow steam turbine (10), said method comprising:
supplying steam to the turbine inlet (30);
allowing steam to bleed from a main flow to an annulus (68) bounded by an inner shell (56), nozzle plate (58) and rotor body (54) of the turbine.

2. A cooling steam flow path (66) through a double flow steam turbine (10), the turbine including at least one high pressure section (12) positioned within an inner shell (56), and a rotor (52) having a rotor body (54), the high pressure section having a nozzle plate (58), the cooling steam flow path extending from a main inlet flow to an annulus (68) bounded by the inner shell, the nozzle plate, and the rotor body.

3. A flow path (66) in accordance with Claim 2 wherein said cooling path further extends from said annulus (68) to a bucket wheel space (72).

4. A flow path (66) in accordance with Claim 3 wherein said flow path extends from said bucket wheel space (72) to dovetail steam balance holes (74) of a bucket dovetail.

5. A flow path (66) in accordance with Claim 4 wherein steam said flow path extends from said bucket dovetail to a stage exit (76).

6. A rotary machine (10) comprising:
a rotor rotatable about a longitudinal axis and comprising a rotor body (54) having an outer annular surface;
an annular outer casing comprising an inner surface, said outer casing spaced radially outwardly from said rotor;
an inner shell (56) spaced from said outer casing inner surface;
a high pressure compressor (62) coupled to said rotor, a nozzle plate (58) located at an inlet (60) of said high pressure compressor; and
a cooling path (66) comprising cooling openings (70) that allow cooling steam to flow from a main inlet flow to an annulus (68) bounded by said inner shell, said nozzle plate, and said rotor body.

7. A rotary machine (10) in accordance with Claim 6 where said turbine is a high pressure double flow steam turbine.

8. A rotary machine (10) in accordance with Claim 6 wherein steam in said annulus (68) is directed to a bucket wheel space (72).

9. A rotary machine (10) in accordance with Claim 8 wherein steam in said bucket wheel space (72) is directed to dovetail steam balance holes (74) of a bucket dovetail.

10. A rotary machine (10) in accordance with Claim 9 wherein steam is directed from said bucket dovetail to a stage exit (76).
